# EUROPEAN PATENT APPLICATION

(11) **EP 4 681 593 A1**
(43) Date of publication of application: **21.01.2026**
(21) Application number: 24769773.3
(22) Date of filing: 04.03.2024
(51) Int. Cl.: A47L 11/24

(54) **SELF-MOVING CLEANING DEVICE, CONTROL METHOD AND APPARATUS THEREFOR AND STORAGE MEDIUM**

(30) Priority: 15.03.2023 CN 202310252611
(71) Applicant: Beijing Roborock Innovation Technology Co., Ltd., Beijing 102206 (CN)
(72) Inventor: HOU, Zhengtao, Beijing 102206 (CN); LUO, Longyue, Beijing 102206 (CN)
(74) Representative: Cabinet Beau de Loménie
(86) International application number: PCT/CN2024/079788
(87) International publication number: WO 2024/188079

(57) **Abstract**

A self-moving cleaning device (100), a control method and apparatus therefor, and a storage medium. The self-moving cleaning device (100) comprises a body (110) and a cleaning element (153) arranged at the bottom of the body (110), at least part of the cleaning element (153) being located outside an edge projection area of the body (110). The control method comprises: determining whether the self-moving cleaning device (100) is in a narrow area (S401); and, when the self-moving cleaning device (100) is in the narrow area, controlling the self-moving cleaning device (100) to execute an obstacle avoidance operation (S402).

## Description

The present application claims priority to the Chinese patent application No. 202310252611.4, filed with the Chinese Patent Office on March 15, 2023 and entitled "SELF-MOVING CLEANING DEVICE AND CONTROL METHOD AND APPARATUS THEREOF AS WELL AS STORAGE MEDIUM", which is incorporated herein by reference in its entirety.

### TECHNICAL FIELD

The present disclosure relates to the field of intelligent control technologies, and in particular to a self-moving cleaning device and a control method and apparatus thereof as well as a storage medium.

### BACKGROUND

A current cleaning device, such as a self-moving cleaning robot, can usually travel automatically in a certain area to be cleaned to complete a cleaning operation without a user's operation. During the traveling process, the cleaning device may encounter an obstacle and needs to avoid the obstacle to continue traveling.

### SUMMARY

### (I) Object of the present application

An object of the present application is to provide a self-moving cleaning device and a control method and apparatus thereof as well as a storage medium.

### (II) Technical Solutions

A first aspect of the present disclosure provides a control method of a self-moving cleaning device. The self-moving cleaning device includes a body and a cleaning element arranged at the bottom of the body, wherein at least a portion of the cleaning element is located outside an edge projection area of the body. The control method of the self-moving cleaning device includes: determining whether the self-moving cleaning device is in a narrow area; and when the self-moving cleaning device is in the narrow area, controlling the self-moving cleaning device to perform an obstacle avoidance operation.

In some optional embodiments, the cleaning element is located at the rear of the body; and said determining whether the self-moving cleaning device is in the narrow area includes: when the self-moving cleaning device performs a turning operation, if it is determined that the cleaning element is in a first state and the self-moving cleaning device is at a first position in a space where it is located, determining that the self-moving cleaning device is in the narrow area.

In some optional embodiments, the self-moving cleaning device includes a perception apparatus; and said determining that the self-moving cleaning device is at the first position in the space where it is located includes at least one of the following ways:
a trigger member located at a front part of the body in the perception apparatus is triggered;
a first detection member located on the body in the perception apparatus detects that there is a cliff feature ahead of the body; and
a second detection member located on the body in the perception apparatus detects that a distance between the body and an obstacle located ahead of the body is less than a preset threshold.

In some optional embodiments, said determining that the cleaning element is in the first state includes: determining whether the cleaning element is in the first state based on electrical signal information of a driving part of the cleaning element, wherein the electrical signal information of the driving part changes when the cleaning element touches an obstacle.

In some optional embodiments, the body is circular; and said determining that the cleaning element is in the first state includes: determining whether the cleaning element is in the first state based on a radius of the body, a maximum distance between an outer edge of the cleaning element located outside the edge projection area of the body and a rotation center of the body, and a distance between the obstacle and the body.

In some optional embodiments, said controlling the self-moving cleaning device to perform the obstacle avoidance operation includes: acquiring a reachable area of the self-moving cleaning device based on a map of the space where the self-moving cleaning device is located; and determining a rotation direction and a rotation angle of the self-moving cleaning device based on the reachable area, and controlling the self-moving cleaning device to perform a backward operation after rotating according to the rotation direction and the rotation angle to enable the self-moving cleaning device to move away from the narrow area and then perform the turning operation.

In some optional embodiments, said controlling the self-moving cleaning device to perform the obstacle avoidance operation further includes: if the self-moving cleaning device is still in the narrow area after executing the turning operation, controlling the self-moving cleaning device to repeatedly perform an obstacle separation operation multiple times until the self-moving cleaning device completes the turning operation, wherein the obstacle separation operation includes: re-determining the rotation direction and the rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

In some optional embodiments, said controlling the self-moving cleaning device to perform the obstacle avoidance operation further includes: if the self-moving cleaning device is still located in the narrow area after repeatedly executing the obstacle separation operation multiple times, adjusting a rotation direction of the cleaning element to enable the rotation direction of the cleaning element to be the same as a turning direction of the turning operation, or controlling the cleaning element to stop rotating and controlling the self-moving cleaning device to perform the turning operation until the self-moving cleaning device escapes the narrow area.

A second aspect of the present disclosure provides a control apparatus of a self-moving cleaning device. The self-moving cleaning device includes a body and a cleaning element arranged at the bottom of the body, wherein at least a portion of the cleaning element is located outside an edge projection area of the body. The control apparatus of the self-moving cleaning device includes: a determination module configured to determine whether the self-moving cleaning device is in a narrow area; and a control module configured to: when the self-moving cleaning device is in the narrow area, control the self-moving cleaning device to perform an obstacle avoidance operation.

In some optional embodiments, the cleaning element is located at the rear of the body; and the determination module is configured to: when the self-moving cleaning device performs a turning operation, if it is determined that the cleaning element is in a first state and the self-moving cleaning device is at a first position in a space where it is located, determine that the self-moving cleaning device is in the narrow area.

In some optional embodiments, the self-moving cleaning device includes a perception apparatus; and the determination module includes: a first determination unit configured to determine that the self-moving cleaning device is at the first position in the space where it is located by at least one of the following ways: a trigger member located at a front part of the body in the perception apparatus is triggered; a first detection member located on the body in the perception apparatus detects that there is a cliff feature ahead of the body; and a second detection member located on the body in the perception apparatus detects that a distance between the body and an obstacle located ahead of the body is less than a preset threshold.

In some optional embodiments, the determination module includes: a second determination unit configured to determine whether the cleaning element is in the first state based on electrical signal information of a driving part of the cleaning element, wherein the electrical signal information of the driving part changes when the cleaning element touches an obstacle.

In some optional embodiments, the body is circular; and the determination module includes: a third determination unit configured to determine whether the cleaning element is in the first state based on a radius of the body, a maximum distance between an outer edge of the cleaning element located outside the edge projection area of the body and a rotation center of the body, and a distance between the obstacle and the body.

In some optional embodiments, the control module includes: an acquisition unit configured to acquire a reachable area of the self-moving cleaning device based on a map of the space where the self-moving cleaning device is located; and a first processing unit configured to determine a rotation direction and a rotation angle of the self-moving cleaning device based on the reachable area, and control the self-moving cleaning device to perform a backward operation after rotating according to the rotation direction and the rotation angle to enable the self-moving cleaning device to move away from the narrow area and then perform the turning operation.

In some optional embodiments, the control module further includes: a second processing unit configured to: if the self-moving cleaning device is still in the narrow area after executing the turning operation, control the self-moving cleaning device to repeatedly perform an obstacle separation operation multiple times until the self-moving cleaning device completes the turning operation, wherein the obstacle separation operation includes: re-determining the rotation direction and rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

In some optional embodiments, the control module further includes: a third processing unit configured to: if the self-moving cleaning device is still located in the narrow area after repeatedly executing the obstacle separation operation multiple times, adjust a rotation direction of the cleaning element to enable the rotation direction of the cleaning element to be the same as a turning direction of the turning operation, or control the cleaning element to stop rotating and control the self-moving cleaning device to perform the turning operation until the self-moving cleaning device escapes the narrow area.

A third aspect of the present disclosure provides a readable storage medium, storing a program or an instruction thereon, wherein the program or the instruction, when performed by a processor, implements the steps of the control method of the self-moving cleaning device according to any one of items in the first aspect.

A fourth aspect of the present disclosure provides a self-moving cleaning device, including a storage medium, a processor, and a computer program stored on the storage medium and executable on the processor, wherein the processor, when executing the program, implements the control method of the self-moving cleaning device according to any one of items in the first aspect.

A fifth aspect of the present disclosure provides a self-moving cleaning device. The self-moving cleaning device includes: a body and a cleaning element arranged at the bottom of the body, at least a portion of the cleaning element being located outside an edge projection area of the body; a driving apparatus configured to drive the self-moving cleaning device to travel; and a control module configured to determine whether the self-moving cleaning device is in a narrow area, and when the self-moving cleaning device is in the narrow area, control the driving apparatus to drive the self-moving cleaning device to perform an obstacle avoidance operation.

In some optional embodiments, the control module is further configured to: when the self-moving cleaning device performs a turning operation, if it is determined that the cleaning element is in a first state and the self-moving cleaning device is at a first position in a space where it is located, determine that the self-moving cleaning device is in the narrow area.

In some optional embodiments, the self-moving cleaning device includes a perception apparatus; and said determining that the self-moving cleaning device is at the first position in the space where it is located includes at least one of the following ways: a trigger member located at a front part of the body in the perception apparatus is triggered; a first detection member located on the body in the perception apparatus detects that there is a cliff feature ahead of the body; and a second detection member located on the body in the perception apparatus detects that a distance between the body and an obstacle located ahead of the body is less than a preset threshold.

In some optional embodiments, the self-moving cleaning device further includes: a driving part configured to drive the cleaning element to rotate, and a perception apparatus configured to sense electrical signal information of the driving part; and the control module is further configured to: determine whether the cleaning element is in the first state based on information sensed by the perception apparatus, wherein the electrical signal information of the driving part changes when the cleaning element touches an obstacle.

In some optional embodiments, the body is circular; the self-moving cleaning device further includes: a perception apparatus configured to sense a distance between the obstacle and the body; and the control module is further configured to: determine whether the cleaning element is in the first state based on a radius of the body, a maximum distance between an outer edge of the cleaning element located outside the edge projection area of the body and a rotation center of the body, and the information sensed by the perception apparatus.

In some optional embodiments, the control module is further configured to: acquire a reachable area of the self-moving cleaning device based on a map of the space where the self-moving cleaning device is located; and determine a rotation direction and a rotation angle of the self-moving cleaning device based on the reachable area, and control the driving apparatus to drive the self-moving cleaning device to perform a backward operation after rotating according to the rotation direction and the rotation angle to enable the self-moving cleaning device to move away from the narrow area and then perform the turning operation.

In some optional embodiments, the control module is further configured to: if the self-moving cleaning device is still in the narrow area after executing the turning operation, control the driving apparatus to drive the self-moving cleaning device to repeatedly perform an obstacle separation operation multiple times until the self-moving cleaning device completes the turning operation, wherein the obstacle separation operation includes: re-determining the rotation direction and the rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

In some optional embodiments, the control module is further configured to: if the self-moving cleaning device is still located in the narrow area after repeatedly executing the obstacle separation operation multiple times, control the driving part of the cleaning element to adjust a rotation direction of the cleaning element to enable the rotation direction of the cleaning element to be the same as a turning direction of the turning operation, or control the driving part of the cleaning element to enable the cleaning element to stop rotating and control the driving apparatus to drive the self-moving cleaning device to perform the turning operation until the self-moving cleaning device escapes the narrow area.

### (III) Technical Effects

The above technical solutions of the present application have the following technical effects.
In the technical solutions of the present application, by confirming whether the self-moving cleaning device is in a narrow area, whether the self-moving cleaning device can pass through this area smoothly is determined. When it is determined that the self-moving cleaning device is in the narrow area, it indicates that the cleaning element interferes with an obstacle and the self-moving cleaning device is unable to move forward, or the distance the self-moving cleaning device can move forward is too short to ensure that the cleaning element disengages from the obstacle, that is, the self-moving cleaning device cannot perform a turning operation directly within this narrow area. Therefore, the self-moving cleaning device is controlled to perform an obstacle avoidance operation to escape the narrow area, thereby reducing or avoiding the possibility that the cleaning element of the self-moving cleaning device interferes with the obstacle again or continuously, and improving the smoothness of the turning operation of the self-moving cleaning device.

### BRIEF DESCRIPTION OF THE DRAWINGS

By reading the following detailed description of optional implementations, various other advantages and benefits will become clear to those of ordinary skill in the art. The accompanying drawings are only for the purpose of illustrating optional implementations, but are not considered to be limitations of the present application. Throughout the accompanying drawings, the same reference symbols refer to the same components. In the accompanying drawings:
FIG. 1 is a schematic structural diagram of a self-moving cleaning device according to an optional embodiment of the present disclosure;
FIG. 2 is a schematic structural diagram of the embodiment shown in FIG. 1 from another perspective;
FIG. 3 is a schematic diagram of a target interference area of a self-moving cleaning device according to an optional embodiment of the present disclosure;
FIG. 4 is a schematic flowchart of a control method of a self-moving cleaning device provided by an embodiment of the present disclosure;
FIG. 5 is a schematic block diagram of a control apparatus of a self-moving cleaning device provided by an embodiment of the present disclosure; and
FIG. 6 is a schematic diagram of an electronic structure of a self-moving cleaning device provided by an embodiment of the present disclosure.

### Description of the reference signs:

100 self-moving cleaning device, 110 body, 111 forward portion, 112 rearward portion, 120 perception apparatus, 121 position determination apparatus, 122 buffer, 130 human-machine interaction system, 140 driving apparatus, 141 driving wheel assembly, 142 driven wheel, 150 cleaning system, 151 dry cleaning system, 152 side brush, 153 cleaning element, 160 control module, 500 control apparatus, 510 determination module, 520 control module, 601 processing apparatus, 602 ROM (Read-Only Memory), 603 RAM (Random Access Memory), 604 bus, 605 I/O (Input/Output) interface, 606 input apparatus, 607 output apparatus, 608 storage apparatus, and 609 communication apparatus.

### DETAILED DESCRIPTION

In the following description, a large number of specific details are provided to understand the technical solutions provided by the present disclosure more thoroughly. However, it is apparent to those skilled in the art that the technical solutions provided by the present disclosure may be implemented without one or more of these details.

It should be noted that the terms used herein are only intended to describe specific embodiments rather than to limit the exemplary embodiments according to the present disclosure. The singular forms as used herein are also intended to include the plural forms unless otherwise indicated clearly in the context. Furthermore, it should also be understood that the terms "include" and/or "comprise" used in the Description specify the existence of the stated features, integers, steps, operations, elements and/or components, but do not exclude the existence or addition of one or more other features, integers, steps, operations, elements, components and/or combinations thereof.

The exemplary embodiments according to the present disclosure will now be described in more detail with reference to the accompanying drawings. However, these exemplary embodiments may be implemented in a variety of different forms and should not be construed as being limited to the embodiments set forth herein. It should be understood that these embodiments are provided to make the disclosure of the present disclosure thorough and complete and to fully convey the concepts of these exemplary embodiments to those of ordinary skill in the art.

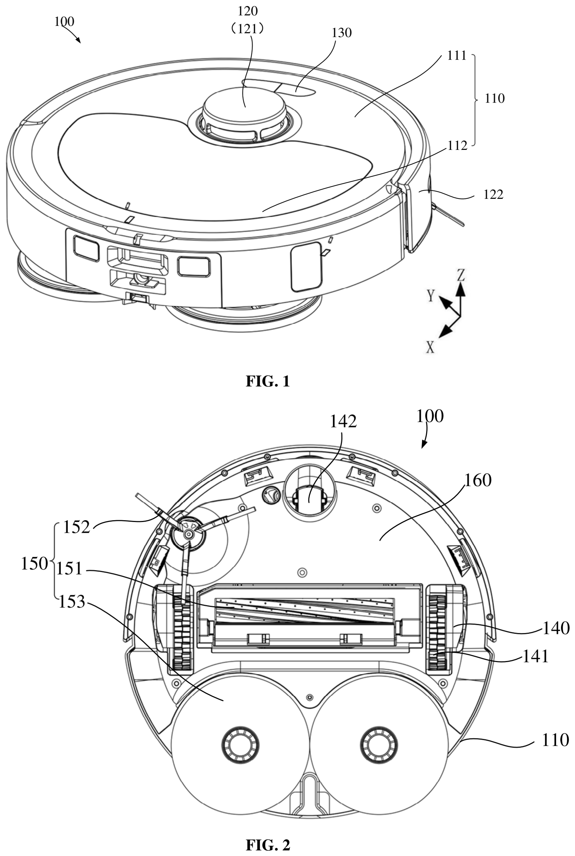

An embodiment of the present disclosure provides a possible application scenario, which includes a self-moving cleaning device 100. FIGs. 1 and 2 are schematic structural diagrams of the self-moving cleaning device 100 according to an exemplary implementation of the present disclosure. As shown in FIGs. 1 and 2, the self-moving cleaning device 100 of the present disclosure may be a mopping robot, a sweeping and mopping integrated machine, etc. For ease of description, this implementation describes the technical solution of the present disclosure using the sweeping and mopping integrated machine as an example.

As shown in FIGs. 1 and 2, the self-moving cleaning device 100 may include a mobile platform, a perception apparatus 120, a human-machine interaction system 130, a driving apparatus 140, a cleaning module, an energy system, and a control module 160.

The mobile platform may be configured to automatically move along a target direction on an operating surface. The operating surface may be a surface to be cleaned by the self-moving cleaning device 100. In some embodiments, the sweeping self-moving cleaning device 100 works on the ground, which is the operating surface.

In some embodiments, the mobile platform may be an autonomous mobile platform, or a non-autonomous mobile platform. The autonomous mobile platform refers to that the mobile platform itself can automatically and adaptively make an operational decision based on an unexpected environmental input; and the non-autonomous mobile platform itself cannot adaptively make an operational decision based on an unexpected environmental input, but can perform an established procedure or operate according to a certain logic. Accordingly, when the mobile platform is the autonomous mobile platform, the target direction may be determined autonomously by the self-moving cleaning device 100; and when the mobile platform is the non-autonomous mobile platform, the target direction may be set systematically or manually. The mobile platform may be regarded as the body 110 of the self-moving cleaning device 100. When the mobile platform is the autonomous mobile platform, the body 110 includes a forward portion 111 and a rearward portion 112.

As shown in FIGs. 1 and 2, the perception apparatus 120 includes a position determination apparatus 121 located above the body 110, a buffer 122 located at the forward portion 111 of the body 110, a visual sensor and a laser sensor (not shown in the figure), an infrared sensor (not shown in the figure), a magnetometer (not shown in the figure), an accelerometer (not shown in the figure), a gyroscope (not shown in the figure), an odometer (not shown in the figure), an inertial sensor (not shown in the figure), a wheel sensor (not shown in the figure), and other sensing devices located on the body 110, for providing the control module 160 with various position information and motion state information of the machine. For example, whether the cleaning robot has moved can be determined through the gyroscope. For instance, the gyroscope is a triaxial gyroscope, and based on changes in the acceleration of the triaxial gyroscope, whether the cleaning robot has moved can be determined. Or, whether the cleaning robot has rotated can be determined through the wheel sensor.

The position determination apparatus 121 includes, but is not limited to, a camera and a laser ranging apparatus. The laser ranging apparatus (such as a laser distance sensor (LDS)) can measure events (or objects) within a measured height range above the self-moving cleaning device 100. The measured height range may be set, for example, as a range of 8-10 centimeters above the self-moving cleaning device 100.

In order to describe behaviors of the self-moving cleaning device 100 more clearly, directions are defined as follows: the self-moving cleaning device 100 may travel on the ground by various combinations of movements relative to the following three mutually perpendicular axes defined by the body 110, i.e., a transversal axis x, a front-rear axis y and a center vertical axis z. A forward driving direction along the front-rear axis y is designated as "forward", and a rearward driving direction along the front-rear axis y is designated as "rearward". The transverse axis x substantially extends between a right wheel and a left wheel of the self-moving cleaning device 100 along an axial center defined by a center point of the driving wheel assembly 141. The self-moving cleaning device 100 can rotate around the x-axis. It is referred to as "pitching up" when the forward portion 111 of the self-moving cleaning device 100 tilts upward and the rearward portion 112 thereof tilts downward; and it is referred to as "pitching down" when the forward portion 111 of the self-moving cleaning device 100 tilts downward and the rearward portion 112 thereof tilts upward. Additionally, the self-moving cleaning device 100 can rotate around the z-axis. In the forward direction of the self-moving cleaning device 100, it is referred to as "turning right" when the self-moving cleaning device 100 tilts to the right of the y-axis, and it is referred to as "turning left" when the self-moving cleaning device 100 tilts to the left of the y-axis.

As shown in FIG. 2, visual sensors are arranged on the body 110, and in front and rear of the driving wheel assembly 141. These visual sensors are configured to capture images around the self-moving cleaning device 100 to prevent the self-moving cleaning device 100 from falling during backward movement, thereby avoiding damage to the self-moving cleaning device 100. The aforementioned "front" refers to a side the same as the traveling direction of the self-moving cleaning device 100, and the aforementioned "rear" refers to a side opposite to the traveling direction of the self-moving cleaning device 100. It can be understood that the positions and number of the visual sensors can be set as needed.

Various components of the perception apparatus 120 may operate independently, or operate together to achieve an intended function more accurately. The surface to be cleaned is identified by the visual sensors and the laser sensor to determine physical characteristics of the surface to be cleaned, including a surface material, a degree of cleanliness, and the like, which may be determined more accurately in combination with the visual sensor, the laser sensor, and the like.

The forward portion 111 of the body 110 is provided with the buffer 122. During cleaning, when the driving wheel assembly 141 propels the self-moving cleaning device 100 to travel on the ground, the buffer 122 detects one or more events (or objects) in a travelling path of the self-moving cleaning device 100 via a sensor system, such as an infrared sensor. The self-moving cleaning device 100, upon detection of an event (or object) such as an obstacle or wall by the buffer 122, may respond to the event (or object), for example, moving away from the obstacle or crossing the obstacle, by controlling the driving wheel assembly 141.

The control module 160 is arranged on a main circuit board inside the body 110, and includes a computing processor such as a central processing unit and an application processor, that communicates with a non-transitory storage medium such as a hard disk, a flash memory and a random access memory. The application processor is configured to receive environmental information sensed by the plurality of sensors and transmitted from the perception apparatus 120. Further, the control module 160 may also determine whether to activate the cleaning module to perform a cleaning operation based on the environmental information and an environmental map.

Specifically, the control module 160 can comprehensively determine a current operation state of the ground sweeping robot, such as crossing a doorsill, moving onto a carpet, being at a cliff, being stuck from above or below, having a full dust bin, being picked up or the like by combining distance information and speed information which are fed back by the buffer 122, and the sensing devices such as the visual sensors, the laser sensor, the infrared sensor, the magnetometer, the accelerometer, the gyroscope and the odometer. In addition, it further gives specific next action strategies for different situations, such that the operation of the self-moving cleaning device 100 is more in line with requirements of an owner, providing better user experience. Further, the control module 160 can plan the most efficient and reasonable running path and running mode based on real-time map information derived by SLAM (Simultaneous Localization and Mapping), greatly improving the running efficiency of the self-moving cleaning device 100.

The driving apparatus 140 may perform a driving command based on specific distance and angle information, such as x, y, and theta components, to manipulate the self-moving cleaning device 100 to travel across the ground. In order for the self-moving cleaning device 100 to move on the ground more stably or have a higher movement ability, the self-moving cleaning device 100 may include one or more steering assemblies. The steering assembly may be a driven wheel or a driving wheel, and structurally includes but is not limited to a universal wheel. The steering assembly may be located in front of the driving wheel assembly 141.

The driving wheel assembly 141 may be detachably connected to the body 110 to facilitate assembly, disassembly and maintenance. The driving wheel may have a biased drop-type suspension system, movably fastened, for example, rotatably attached to the body 110 of the self-moving cleaning device 100, and maintains contact and traction with the ground through an elastic element such as a tension spring or compression spring with a certain gripping force, while the cleaning module of the self-moving cleaning device 100 is also in contact with the surface to be cleaned with a certain pressure. The cleaning module may include a dry cleaning module and/or a wet cleaning module.

The energy system includes a rechargeable battery, such as a nickel-metal hydride battery or a lithium battery. The rechargeable battery may be connected to a charging control circuit, a battery pack charging temperature detection circuit, and a battery undervoltage monitoring circuit, wherein the charging control circuit, the battery pack charging temperature detection circuit and the battery undervoltage monitoring circuit are then connected to a single-chip microcomputer control circuit. The main unit is charged by connecting to a charging dock via charging electrodes arranged on a side or at the bottom of the body 110.

The human-machine interaction system 130 includes buttons that are on a panel of the main unit and used by a user to select functions. The human-machine interaction system 130 may further include a display screen and/or an indicator light and/or a horn that present a current state or function selection items of the self-moving cleaning device to the user. The human-machine interaction system 170 may further include a mobile client program.

The cleaning system 150 includes a wet cleaning system, that is, the automatic cleaning device may be a mopping machine. Or, the cleaning system 150 includes a wet cleaning system and a dry cleaning system 151, that is, the automatic cleaning device is a sweeping and mopping integrated machine.

The dry cleaning system 151 may include a rolling brush, a dust bin, a dust suction fan, and an air outlet. The rolling brush having a certain interference with the ground sweeps up garbage on the ground and rolls up the garbage to the front of a dust suction inlet between the rolling brush and the dust bin, and then the garbage is sucked into the dust bin by air having a suction force, which is generated by the suction fan and passes through the dust bin. The dry cleaning system 151 may further include a side brush 152 having a rotary shaft angled relative to the ground, for moving debris into a area of the rolling brush of the cleaning system 150.

The wet cleaning system may include: a cleaning assembly, a water delivery mechanism, a liquid storage tank, and the like. The cleaning assembly may be arranged below the liquid storage tank, and a cleaning liquid in the liquid storage tank is transported to the cleaning assembly by the water delivery mechanism, such that the cleaning assembly can perform wet cleaning on a plane to be cleaned. The cleaning liquid in the liquid storage tank may also be directly sprayed on the plane to be cleaned, and the cleaning assembly achieves cleaning of the plane by spreading the cleaning liquid evenly. Or, the self-moving cleaning device 100 is provided with a water outlet communicated with the liquid storage tank, through which the liquid in the liquid storage tank is transported to the cleaning assembly.

As shown in FIG. 2, the cleaning assembly includes at least one cleaning element 153 rotatable relative to the body 110. It should be noted that the cleaning assembly also includes a motion mechanism. The entire cleaning assembly may be mounted on the body 110 through the motion mechanism, and the cleaning assembly moves with the movement of the body 110 to achieve the mopping function. The motion mechanism is configured to drive the cleaning element 153 to act. For example, the motion mechanism can drive the cleaning element 153 to raise or lower, and the motion mechanism can also drive the cleaning element 153 to rotate. Thus, depending on the requirement for the cleaning element 153 to contact the surface to be cleaned or not, the raising, lowering and rotating operations of the cleaning element 153 can be achieved through the motion mechanism to meet different functional requirements of the cleaning element 153. It should be noted that when the cleaning element 153 interferes with the surface to be cleaned for the mopping operation, the motion mechanism drives the cleaning element 153 to perform the rotating operation.

As shown in FIG. 2, in the forward direction of the self-moving cleaning device 100, the cleaning element 153 is located at the rear of the dry cleaning system 151. The cleaning element 153 may usually be a water-absorbing flexible material such as fabric or sponge. In this solution, the cleaning element 153 may be at least one rotating disc. Water from the liquid storage tank of the self-moving cleaning device 100 is directed to the cleaning element 153. The moistened cleaning element 153 removes stains on the ground through rotational motion. Specifically, as shown in FIGs. 1 and 2, the cleaning element 153 includes two rotating discs arranged on the left and right sides along the forward direction of the body 110.

As shown in FIG. 2, at least a portion of the cleaning element 153 is located outside an edge projection area of the body 110. That is, at least a portion of the cleaning element 153 protrudes from the body 110, such that the cleaning range of the cleaning element 153 can extend beyond the limits of the walking range of the mobile platform, thereby achieving comprehensive cleaning of corner positions that the body 110 cannot fit, widening the cleaning range of the cleaning element 153 and improving the cleaning effect of the automatic cleaning device.

However, since at least a portion of the cleaning element 153 protrudes from the body 110, in the traveling process of the self-moving cleaning device 100, when the self-moving cleaning device 100 travels into a narrow area, for example, if the body 110 of the self-moving cleaning device does not hit an obstacle, but the cleaning element 153 is in contact and interferes with the obstacle, it may cause the cleaning element 153 to be unable to directly perform a turning operation, thereby adversely affecting the smoothness of the operation of the self-moving cleaning device 100.

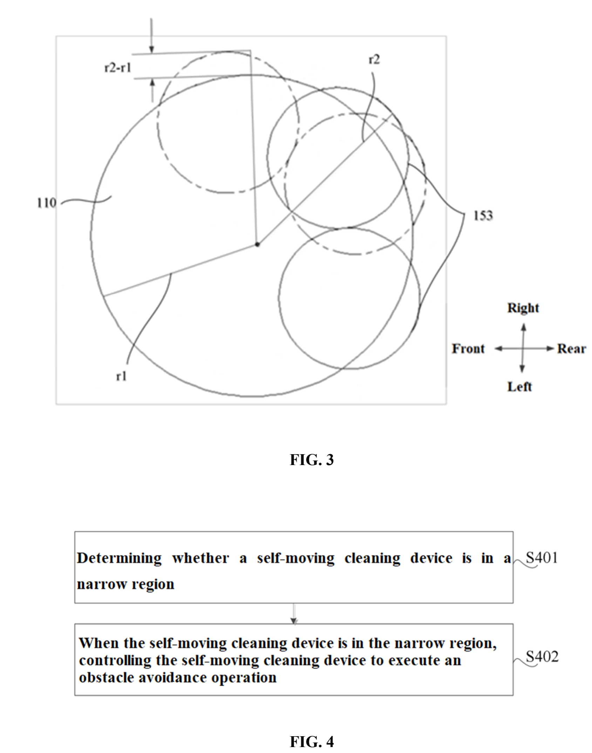

In view of this, an embodiment of the present disclosure provides a control method of a self-moving cleaning device. As shown in FIG. 4, the method includes the following steps.

In step S401, whether the self-moving cleaning device is in a narrow area is determined.

In step S402, when the self-moving cleaning device is in the narrow area, the self-moving cleaning device is controlled to perform an obstacle avoidance operation.

When the self-moving cleaning device 100 performs autonomous exploration in an environmental space, based on the SLAM (Simultaneous Localization and Mapping) algorithm, localization and mapping may be performed through the movement and measurement of the self-moving cleaning device 100 to obtain a map of the space where the self-moving cleaning device 100 is located. The map of the space where the self-moving cleaning device 100 is located provides detailed environmental feature data, is suitable for spatial representation in an unstructured environment, and serves as an important basis for navigation and route planning of the self-moving cleaning device 100.

The narrow area may be a area in the space where the self-moving cleaning device 100 is located that may adversely affect the smooth traveling of the self-moving cleaning device 100. For example, when the self-moving cleaning device 100 is in a narrow area, the body 110 of the self-moving cleaning device 100 may not be in contact with an obstacle, but the portion of the cleaning element 153 protruding from the body 110 of the self-moving cleaning device 100 may be in contact with the obstacle. This makes the self-moving cleaning device 100 unable to directly perform operations such as turning or turning around, thereby adversely affecting the smooth traveling of the self-moving cleaning device 100. Therefore, when the self-moving cleaning device 100 is in an operating state, determining whether the self-moving cleaning device 100 is in the narrow area provides a basis for judging whether the self-moving cleaning device 100 can pass through the area smoothly.

In a specific embodiment, as shown in FIG. 2, the cleaning element 153 is located at the rear of the body. The number of the cleaning elements 153 may be one, two, or more. The number of the cleaning elements 153 of the self-moving cleaning device 100 shown in FIG. 2 is two, and the two cleaning elements 153 are symmetrically distributed along the left-right direction of the self-moving cleaning device 100. The front-rear and left-right directions of the self-moving cleaning device 100 are as shown by the arrows in FIG. 2. Determining whether the self-moving cleaning device is in the narrow area may include the following.

When the self-moving cleaning device performs a turning operation, if it is determined that the cleaning element is in a first state and the self-moving cleaning device is at a first position in a space where it is located, it is determined that the self-moving cleaning device is in the narrow area.

The cleaning element 153 being in the first state characterizes that the cleaning element 153 collides and interferes with an obstacle. Specifically, it may be that the portion of the cleaning element 153 protruding from the body 110 interferes with and touches the obstacle, while the body 110 dose not interfere with the obstacle. Further, as shown in FIG. 3, the body 110 is circular, the body 110 has a radius r1, and r1 characterizes the distance between the outer edge of the body 110 and the rotation center of the body 110. The maximum distance between the outer edge of the cleaning element 153 located outside the edge projection area of the body 110 and the rotation center of the body 110 is r2. Since r1 and r2 are concentric, the circle corresponding to r2 will have an extra annular area compared to the circle corresponding to r1, and the cleaning element 153 is located at the rear of the body 110 with a portion protruding from the body 110. Therefore, when the distance between the obstacle and the rotation center of the body 110 falls between r1 and r2, or when the self-moving cleaning device travels into a narrow area with a width between 2r1 and 2r2 and is unable to perform a turning operation, and other actions are required to enable the self-moving cleaning device 100 to escape this narrow area.

The self-moving cleaning device 100 being at the first position in the space where it is located may mean that the forward movement of the self-moving cleaning device 100 is blocked. Specifically, it can be understood that the self-moving cleaning device 100 is unable to move forward, or the distance the self-moving cleaning device 100 can move forward is insufficient to ensure that the cleaning element 153 of the self-moving cleaning device 100 can disengage from the obstacle. For example, the distance the self-moving cleaning device 100 can move forward is shorter, and after the self-moving cleaning device 100 moves forward this distance, the cleaning element 153 still interferes with the obstacle, that is, the self-moving cleaning device 100 still cannot smoothly perform the turning operation.

Therefore, when the self-moving cleaning device 100 performs a turning operation, it is determined that the self-moving cleaning device 100 is in a narrow area if it is determined that the cleaning element 153 is in the first state and the self-moving cleaning device 100 is at the first position in the space where it is located, that is, the cleaning element 153 interferes with the obstacle and the self-moving cleaning device 100 is unable to move forward, or the distance the self-moving cleaning device 100 can move forward is insufficient to ensure that the cleaning element 153 can disengage from the obstacle. It can be understood that when the self-moving cleaning device 100 is in the narrow area, it cannot perform the turning operation directly.

Therefore, if it is determined that the self-moving cleaning device 100 is in the narrow area, the control module 160 controls the driving apparatus to drive the self-moving cleaning device 100 to perform an obstacle avoidance operation, such that the self-moving cleaning device 100 can smoothly escape the narrow area, reducing or avoiding the possibility that the cleaning element 153 of the self-moving cleaning device 100 interferes with the obstacle again, and reducing the possibility that the self-moving cleaning device 100 is trapped in the narrow area and cannot operate smoothly, which in turn ensures that the self-moving cleaning device 100 can smoothly perform the turning operation.

Further, if it is determined that the self-moving cleaning device 100 is not in a narrow area, it means that the self-moving cleaning device 100 can smoothly perform the turning operation in this area. Thus, this area will not affect the smooth traveling of the self-moving cleaning device 100.

In other words, according to the control method of the self-moving cleaning device provided by the embodiment of the present disclosure, by confirming whether the self-moving cleaning device 100 is in a narrow area, whether the self-moving cleaning device 100 can pass through this area smoothly is determined. When it is determined that the self-moving cleaning device 100 is in the narrow area, it indicates that the cleaning element 153 interferes with an obstacle and the self-moving cleaning device 100 is unable to move forward, or the distance the self-moving cleaning device 100 can move forward is too short to ensure that the cleaning element 153 can disengage from the obstacle, that is, the self-moving cleaning device 100 cannot perform the turning operation directly within this narrow area. Therefore, the self-moving cleaning device 100 is controlled to perform an obstacle avoidance operation to escape the narrow area, thereby reducing or avoiding the possibility that the cleaning element 153 of the self-moving cleaning device 100 interferes with the obstacle again or continuously, and improving the smoothness of the turning operation of the self-moving cleaning device 100.

Further, as a refinement and extension of the specific implementation of the above embodiment, to completely illustrate the specific implementation process of this embodiment, the self-moving cleaning device being at the first position in the space where it is located can be determined by at least one of the following ways.

(1) A trigger member located at a front part of the body in the perception apparatus is triggered.

In this embodiment, the perception apparatus 120 includes a trigger member. The trigger member is arranged at the front part of the body 110. The trigger member is configured to be triggered when the front part of the body interferes and collides with an obstacle. The trigger member may be a collision sensor, a proximity sensor, or other structures that meet requirements, arranged on the buffer 122 at the forward portion 111 of the body 110. When the trigger member is triggered, it indicates that the self-moving cleaning device has collided with an obstacle during forward movement. For example, the buffer located at the front part of the body 110 collides with a wall, which triggers the collision sensor to act. Thus, when the trigger member is triggered, it indicates that the forward movement of the self-moving cleaning device 100 is blocked, and the self-moving cleaning device 100 cannot perform the forward movement operation. Therefore, when the trigger member is triggered, it can be determined that the self-moving cleaning device 100 is at the first position in the space where it is located.

(2) A first detection member located on the body in the perception apparatus detects that there is a cliff feature ahead of the body.

In this embodiment, the cliff feature may refer to a hazardous area with a height difference in an environmental scene where the self-moving cleaning device 100 is located. The cliff feature may refer to steps, stair railings, stair guardrails and the like at the edge of the area of the space. When the first detection member in the perception apparatus 120 detects that there is a cliff feature, such as steps, stair railings and stair guardrails, ahead of the body 110, it indicates that the forward movement of the self-moving cleaning device 100 is blocked, and the self-moving cleaning device 100 cannot perform the forward movement operation. Therefore, when the first detection member detects that there is the cliff feature ahead of the body 110, it can be determined that the self-moving cleaning device 100 is at the first position in the space where it is located.

In a specific example, the first detection member may be an infrared sensor. The first detection member sends an infrared detection signal to the ground within a preset range; an intensity of reflected light from the ground within the preset range is determined based on a feedback signal of the received infrared detection signal; and it is determined that a cliff feature is detected within the preset range ahead of the body of the self-moving cleaning device based on the reflected light intensity falling within a standard reflected light intensity range.

Specifically, the intensity of reflected light from the ground affects the infrared sensor, and the cliff determination is performed by detecting the change in infrared radiation energy. For example, a feedback signal with a high reflected light intensity is significantly stronger than the feedback signal with a low reflected light intensity at the same distance. The reflected light from the ground is related to factors such as the surface morphology, the material of the ground and the distance between the ground and a detector. The standard reflected light intensity range may be properly set according to different material of surfaces in a flat state, and different materials correspond to different standard reflected light intensity ranges. A user may preset a ground material at a cliff position to determine a standard reflected light intensity range that identifies the cliff.

In another specific example, the first detection member may be a color detection apparatus, through which a color of the ground is acquired; and based on the color of the ground conforming to a preset color, it is determined that the self-moving cleaning device detects a cliff feature within a preset range. A user may preset a ground material at a cliff position to determine the preset color that identifies the cliff.

It should be noted that the first detection member may also be an image capture apparatus. When the image capture apparatus captures image features of stair guardrails, stair railings, or steps ahead of the body, it is determined that there is a cliff feature ahead of the body 110 of the self-moving cleaning device 100. Or, the first detection member may also be other apparatuses meeting the requirements, which are not listed one by one in the present disclosure.

(3) A second detection member located on the body in the perception apparatus detects that the distance between the body and an obstacle located ahead of the body is less than a preset threshold.

In this embodiment, the second detection member may be a laser ranging apparatus located at the top of the body 110 of the self-moving cleaning device 100. The laser ranging apparatus may detect the distance between the body 110 and the obstacle located ahead of the body 110. When the second detection member detects that the distance between the body 110 and the obstacle located ahead of the body 110 is less than the preset threshold, it indicates that the distance the self-moving cleaning device 100 can move forward based on the current position is shorter. Even if the self-moving cleaning device 100 moves forward this distance, the cleaning element may still interfere with the obstacle and cannot disengage from the obstacle, resulting in the self-moving cleaning device 100 still being unable to smoothly perform the turning operation. Therefore, when the second detection member detects that the distance between the body 110 and the obstacle located ahead of the body 110 is less than the preset threshold, it can be determined that the self-moving cleaning device 100 is at the first position in the space where it is located.

It can be understood that the distance between the body 110 and the obstacle located ahead of the body 110 can also be detected by other sensors in the perception apparatus 120.

Further, as a refinement and extension of the specific implementation of the above embodiment, to completely illustrate the specific implementation process of this embodiment, whether the cleaning element is in the first state can be determined by at least one of the following ways.
(1) Whether the cleaning element is in the first state is determined based on electrical signal information of a driving part of the cleaning element, wherein the electrical signal information of the driving part changes when the cleaning element touches an obstacle.

In this embodiment, the driving part of the cleaning element 153 may be a motor. The driving part is configured to drive the cleaning element 153 to rotate. The electrical signal information of the driving part may be current information of the motor, voltage information of the motor, etc. When the cleaning element 153 collides with an obstacle, an electrical signal of the driving part will change, for example, the current of the motor increases. Therefore, by judging the change of the electrical signal information of the driving part, whether the cleaning element 153 of the self-moving cleaning device 100 is in the first state can be determined.

In actual usage scenarios, the perception apparatus 120 of the self-moving cleaning device 100 may include a current sensor. The current sensor is configured to detect the current information of the driving part. Therefore, the control module 160 can determine whether the cleaning element 153 of the self-moving cleaning device 100 is in the first state based on the change of the information detected by the current sensor.

(2) Whether the cleaning element is in the first state is determined based on the radius of the body, the maximum distance between an outer edge of the cleaning element located outside the edge projection area of the body and a rotation center of the body, and the distance between the obstacle and the body.

In this embodiment, as shown in FIG. 3, the body is circular, the body 110 has a radius r1, and r1 characterizes the distance between the outer edge of the body 110 and the rotation center of the body 110. The maximum distance between the outer edge of the cleaning element 153 located outside the edge projection area of the body 110 and the rotation center of the body 110 is r2. r1 and r2 are concentric, and r1 < r2. When the distance between the obstacle and the body is less than the value of r2-r1, it indicates that the obstacle is currently not in contact with the body 110, nor with the cleaning element 153. However, since at least a portion of the cleaning element 153 protrudes from the body 110 in this embodiment of the present disclosure, if the self-moving cleaning device 100 continues to operate, for example, the self-moving cleaning device 100 performs a turning operation, there is a problem that the cleaning element 153 may interfere and collide with this obstacle, adversely affecting the smooth traveling of the self-moving cleaning device 100. Or, when the distance between the obstacle and the body 110 is less than the value of r2-r1, it indicates that the obstacle is currently not in contact with the body 110, but the obstacle may have already been in contact with the cleaning element 153, thereby adversely affecting the smooth turning operation of the self-moving cleaning device 100. Therefore, based on the radius of the body r1, the maximum distance r2 between the outer edge of the cleaning element 153 located outside the edge projection area of the body 110 and the rotation center of the body 110, and the distance between the obstacle and the body, whether the cleaning element is in the first state can be accurately determined.

In actual usage scenarios, after the structure of the self-moving cleaning device 100 is determined, the radius of the body is determined, and the maximum distance between the outer edge of the cleaning element 153 located outside the edge projection area of the body 110 and the rotation center of the body 110 is also determined. The perception apparatus 120 of the self-moving cleaning device 100 includes a laser ranging apparatus located at the top of the body 110 of the self-moving cleaning device 100. This laser ranging apparatus can detect the distance between the self-moving cleaning device 100 and a surrounding obstacle, and then the distance between the obstacle and the body 110 can be determined. It can be understood that the distance between the body and surrounding obstacles may also be measured by other sensors of the perception apparatus 120. Thus, the control module 160 can determine whether the cleaning element 153 of the self-moving cleaning device 100 is in the first state according to the structure of the self-moving cleaning device 100 and the information detected by the perception apparatus 120.

It should be noted that the perception apparatus 120 can detect the distance between the self-moving cleaning device 100 and the surrounding obstacles, and then the position information of the self-moving cleaning device 100 in a map of the space where it is located can be determined.

Further, as a refinement and extension of the specific implementation of the above embodiment, to completely illustrate the specific implementation process of this embodiment, controlling the self-moving cleaning device to perform the obstacle avoidance operation may include the following steps.

In step S501, a reachable area of the self-moving cleaning device is acquired based on a map of the space where the self-moving cleaning device is located.

In step S502, a rotation direction and a rotation angle of the self-moving cleaning device are determined based on the reachable area, and the self-moving cleaning device is controlled to perform a backward operation after rotating according to the rotation direction and the rotation angle to enable the self-moving cleaning device to move away from the narrow area and then perform the turning operation.

The reachable area of the self-moving cleaning device 100 may be a area that the self-moving cleaning device 100 can reach in the map of the space where it is located. The reachable area determined based on the map of the space where the self-moving cleaning device 100 is located may record a area covered by the self-moving cleaning device 100 during the current operation and a area covered during a previous operation of the self-moving cleaning device 100, and may further include a area not yet covered but reachable by the self-moving cleaning device 100. In actual usage scenarios, the control module 160 can determine the reachable area of the self-moving cleaning device 100 based on the information detected by the perception apparatus 120.

Thus, the rotation direction and the rotation angle of the self-moving cleaning device 100 are determined based on the reachable area of the self-moving cleaning device 100, such that the self-moving cleaning device 100 is guided to travel to the reachable area according to the rotation direction and rotation angle determined based on the reachable area. After the self-moving cleaning device 100 is controlled to rotate based on the rotation direction and the rotation angle, the driving apparatus 140 is controlled to drive the self-moving cleaning device 100 to perform a backward operation. Since the rotation direction and the rotation angle are determined based on the reachable area of the self-moving cleaning device 100, that the self-moving cleaning device 100 performs the rotation and then the backward operation can ensure the smooth backward movement of the self-moving cleaning device 100, which reduces the possibility of the self-moving cleaning device 100 interfering and colliding with other obstacles in the backward process. After the control module 160 controls the driving apparatus 140 to drive the self-moving cleaning device 100 to rotate and then perform the backward operation, the self-moving cleaning device can move away from the narrow area. At this time, the cleaning element 153 that was previously in contact and collision with the obstacle has moved away from the obstacle, that is, the cleaning element 153 has disengaged from the obstacle. In addition, there is a certain safe distance between the cleaning element 153 and the obstacle. Thus, a certain operating space is provided for the self-moving cleaning device 100 to perform the turning operation, enabling the self-moving cleaning device 100 to smoothly perform the turning operation. Therefore, after the self-moving cleaning device 100 moves away from the narrow area, controlling the driving apparatus 140 of the self-moving cleaning device 100 to drive the self-moving cleaning device 100 to perform the turning operation is conducive to ensuring that in the process in which the self-moving cleaning device 100 performs the turning operation, the possibility that the cleaning element 153 protruding from the body 110 collides and interferes with the obstacle again or continuously is reduced or avoided, thereby improving the smoothness of the turning operation of the self-moving cleaning device 100.

It should be noted that in other embodiments, the backward distance in the backward operation performed by the self-moving cleaning device 100 after the self-moving cleaning device 100 is controlled to rotate based on the rotation direction and rotation angle determined by a reachable map may be a fixed value or within a fixed range. That is, the self-moving cleaning device 100 stops the backward operation after moving backward a fixed distance or within a fixed range. When the backward distance is a fixed value, the fixed value of the backward distance may be a constant value of 4 cm, 5 cm, 6 cm, or other values. When the backward distance is within a fixed range, the fixed range of the backward distance may span intervals such as 4 cm to 6 cm, 5 cm to 7 cm, and 5 cm to 8 cm, or may be other ranges. Specifically, the backward distance of the fixed value and the backward distance within the fixed range can be set as needed, or can be set according to empirical values. For example, the backward distance of the fixed value may be set based on the structure of the self-moving cleaning device 100 itself, for example, based on the distance by which the cleaning element 153 of the self-moving cleaning device 100 protrudes from the body 110, such that after the self-moving cleaning device 100 rotates based on the rotation direction and the rotation angle determined based on the reachable map and moves backward by the backward distance of the fixed value, it can ensure that the cleaning element 153 that was previously interfering with the obstacle has disengaged from the obstacle, and there is a certain safe distance between the cleaning element 153 and the obstacle. Thus, a certain operating space is provided for the self-moving cleaning device 100 to perform the turning operation, enabling the self-moving cleaning device 100 to smoothly perform the turning operation.

Further, as a refinement and extension of the specific implementation of the above embodiment, to completely illustrate the specific implementation process of this embodiment, controlling the self-moving cleaning device to perform the obstacle avoidance operation may further include the following steps.

In step S503, if the self-moving cleaning device is still in the narrow area after executing the turning operation, the self-moving cleaning device is controlled to repeatedly perform an obstacle separation operation multiple times until the self-moving cleaning device completes the turning operation, wherein the obstacle separation operation includes: re-determining the rotation direction and the rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

In this embodiment, if, after the control module 160 controls the driving apparatus 140 to drive the self-moving cleaning device 100 to rotate in the rotation direction determined based on the reachable area by the rotation angle determined based on the reachable area, the self-moving cleaning device 100 moves backward a certain distance, the self-moving cleaning device 100 again enters a narrow area during the execution of the original turning operation. It indicates that in the process in which the self-moving cleaning device 100 performs the turning operation, the cleaning element 153 collides with the obstacle again, and the self-moving cleaning device 100 is unable to move forward or has a shorter allowable forward movement distance, resulting in the cleaning element 153 being unable to disengage from the obstacle, and adversely affecting the smoothness of the self-moving cleaning device 100 executing the turning operation. That is, the self-moving cleaning device 100 may be unable to complete the turning operation.

Therefore, in this case, the control module 160 may control the driving apparatus 140 to drive the self-moving cleaning device 100 to perform an obstacle separation operation. Specifically, the obstacle separation operation may involve: based on the current position of the self-moving cleaning device 100, re-determining the rotation direction and the rotation angle of the self-moving cleaning device 100 based on the reachable area. After the control module 160 controls the driving apparatus 140 to drive the self-moving cleaning device 100 to rotate based on the re-determined rotation direction and the rotation angle, the driving apparatus 140 is controlled to drive the self-moving cleaning device 100 to perform a backward operation. Since the rotation direction and the rotation angle are determined based on the reachable area of the self-moving cleaning device 100, the self-moving cleaning device 100 executing the rotation and then the backward operation can ensure the smooth backward movement of the self-moving cleaning device 100, which reduces the possibility of the self-moving cleaning device 100 interfering and colliding with other obstacles in the backward process. After the control module 160 controls the driving apparatus 140 to drive the self-moving cleaning device 100 to move backward until the self-moving cleaning device 100 moves away from the narrow area again, that is, the cleaning element 153 that was previously in contact and collision with the obstacle has disengaged from the obstacle and there is a certain safe distance between the cleaning element 153 and the obstacle, at this time, the control module 160 controls the driving apparatus 140 to drive the self-moving cleaning device 100 to perform the turning operation again, so as to further reduce or avoid the possibility that the cleaning element 153 will interfere and collide with the obstacle again or continuously.

Here, if the self-moving cleaning device 100 is still in the narrow area after executing the turning operation again, the control module 160 will control the driving apparatus 140 to drive the self-moving cleaning device 100 to perform the obstacle separation operation again. If the self-moving cleaning device 100 is still in the narrow area after executing the turning operation in the obstacle separation operation again, the control module 160 will control the driving apparatus 140 to drive the self-moving cleaning device 100 to perform the obstacle separation operation again. This iterative process continues, with the self-moving cleaning device 100 being controlled to repeatedly perform the obstacle separation operation multiple times until it completes the turning operation.

It should be noted that the number of repetitions may be two, three, or other quantities, which is not specifically limited in the present disclosure. It can be understood that after each rotation of the self-moving cleaning device 100 according to the rotation direction and the rotation angle determined based on the reachable map, the backward distance in the backward operation may be a fixed value or within a fixed range. For example, the self-moving cleaning device 100 moves backward a fixed distance after each rotation, such as moving backward 5 cm, and then performs the turning operation. If the self-moving cleaning device 100 is in the narrow area once more, after rotating according to the rotation direction and the rotation angle determined based on the reachable area, the self-moving cleaning device 100 performs the backward operation and moves backward a fixed distance again, such as another 5 cm, and then performs the turning operation, and so on.

Further, as a refinement and extension of the specific implementation of the above embodiment, to completely illustrate the specific implementation process of this embodiment, controlling the self-moving cleaning device to perform the corresponding obstacle avoidance operation based on a relative position specifically further includes the following step.

In step S504, if the self-moving cleaning device is still located in the narrow area after repeatedly executing the obstacle separation operation multiple times, a rotation direction of the cleaning element is adjusted to enable the rotation direction of the cleaning element to be the same as a turning direction of the turning operation, or the cleaning element is controlled to stop rotating and the self-moving cleaning device is controlled to perform the turning operation until the self-moving cleaning device escapes the narrow area.

In this embodiment, if the self-moving cleaning device 100 is still in the narrow area after the control module 160 controls the driving apparatus 140 to drive the self-moving cleaning device 100 to repeatedly perform the obstacle separation operation multiple times, it indicates that the cleaning element 153 protruding from the body 110 of the self-moving cleaning device 100 interfering and colliding with the obstacle may prevent the self-moving cleaning device 100 from executing the turning operation. In this case, the control module 160 may adjust the rotation direction of the cleaning element 153 to enable the rotation direction of the cleaning element 153 to be the same as the turning direction of the turning operation. Specifically, the control module 160 may adjust working parameters of the motion mechanism to adjust the rotation direction of the cleaning element 153. For example, when the turning operation performed by the self-moving cleaning device 100 is clockwise relative to the body 110, if the cleaning element 153 is currently rotating counterclockwise, the control module 160 may control the motor of the driving part to reverse its rotation, so as to adjust the rotation direction of the cleaning element 153 to be clockwise. Or, the control module 160 may control the motor of the driving part to stop working, causing the cleaning element 153 to stop rotating, that is, the cleaning element 153 is inactive. Subsequently, the control module 160 controls the driving apparatus 140 to drive the self-moving cleaning device 100 to perform the turning operation. In this way, since the rotation direction of the cleaning element 153 is the same as the rotation direction of the turning operation of the self-moving cleaning device 100, the cleaning element 153 can provide power to assist the self-moving cleaning device 100 in extricating from the trapped conditions. Or, since the cleaning element 153 does not rotate, the cleaning element 153 can reduce resistance for the self-moving cleaning device 100 to extricate the trapped conditions, thereby facilitating the smooth escape of the self-moving cleaning device 100 from the narrow area. This process continues until the self-moving cleaning device 100 escapes the narrow area, after which it can continue to perform the turning operation.

It should be noted that when the turning operation performed by the self-moving cleaning device 100 is counterclockwise relative to the body 110, its principle is the same as that when the turning operation performed by the self-moving cleaning device 100 is clockwise relative to the body 110, which will not be repeated herein.

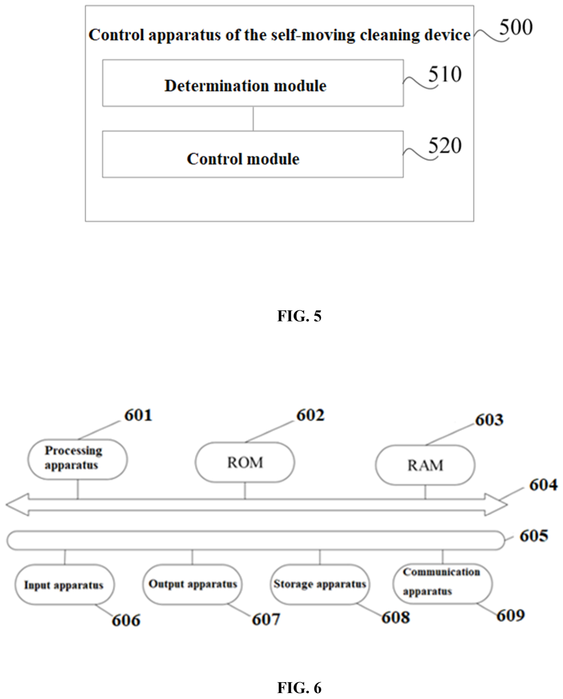

Further, as shown in FIG. 5, as a specific implementation of the above control method of the self-moving cleaning device, an embodiment of the present disclosure provides a control apparatus 500 of the self-moving cleaning device. The self-moving cleaning device includes: a body and a cleaning element arranged at the bottom of the body, at least a portion of the cleaning element being located outside an edge projection area of the body. The control apparatus 500 of the self-moving cleaning device includes a determination module 510 and a control module 520.

The determination module 510 is configured to determine whether the self-moving cleaning device is in a narrow area. The control module 520 is configured to: when the self-moving cleaning device is in the narrow area, control the self-moving cleaning device to perform an obstacle avoidance operation.

Further, the cleaning element is located at the rear of the body. The determination module 510 is specifically configured to: when the self-moving cleaning device performs a turning operation, if it is determined that the cleaning element is in a first state and the self-moving cleaning device is at a first position in a space where it is located, determine that the self-moving cleaning device is in the narrow area.

Further, the self-moving cleaning device includes a perception apparatus. The determination module 510 includes: a first determination unit configured to determine that the self-moving cleaning device is at the first position in the space where it is located by at least one of the following ways: a trigger member located at a front part of the body in the perception apparatus is triggered; a first detection member located on the body in the perception apparatus detects that there is a cliff feature ahead of the body; and a second detection member located on the body in the perception apparatus detects that a distance between the body and an obstacle located ahead of the body is less than a preset threshold.

Further, the determination module 510 includes: a second determination unit configured to determine whether the cleaning element is in the first state based on electrical signal information of a driving part of the cleaning element, wherein the electrical signal information of the driving part changes when the cleaning element touches an obstacle.

Further, the body is circular; and the determination module 510 includes: a third determination unit configured to determine whether the cleaning element is in the first state based on a radius of the body, a maximum distance between an outer edge of the cleaning element located outside the edge projection area of the body and a rotation center of the body, and a distance between the obstacle and the body.

Further, the control module 520 includes: an acquisition unit configured to acquire a reachable area of the self-moving cleaning device based on a map of the space where the self-moving cleaning device is located; and a first processing unit configured to determine a rotation direction and a rotation angle of the self-moving cleaning device based on the reachable area, and control the self-moving cleaning device to perform a backward operation after rotating according to the rotation direction and the rotation angle to enable the self-moving cleaning device to move away from the narrow area and then perform the turning operation.

Further, the control module 520 further includes: a second processing unit configured to: if the self-moving cleaning device is still in the narrow area after executing the turning operation, control the self-moving cleaning device to repeatedly perform an obstacle separation operation multiple times until the self-moving cleaning device completes the turning operation, wherein the obstacle separation operation includes: re-determining the rotation direction and rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

Further, the control module 520 further includes: a third processing unit configured to: if the self-moving cleaning device is still located in the narrow area after repeatedly executing the obstacle separation operation multiple times, adjust a rotation direction of the cleaning element to enable the rotation direction of the cleaning element to be the same as a turning direction of the turning operation, or control the cleaning element to stop rotating and control the self-moving cleaning device to perform the turning operation until the self-moving cleaning device escapes the narrow area.

It should be noted that other corresponding descriptions of the functional modules involved in the control apparatus 500 of the self-moving cleaning device provided in the embodiment of the present disclosure may refer to the descriptions of the corresponding embodiments of the above method, which will not be repeated herein.

Based on the above control method of the self-moving cleaning device and the embodiments of the control apparatus 500 of the self-moving cleaning device, to achieve the above objects, an embodiment of the present disclosure further provides a self-moving cleaning device. The self-moving cleaning device includes a storage medium and a processor. The storage medium is configured to store a computer program. The processor is configured to perform the computer program to implement the control method of the self-moving cleaning device provided in the above embodiments.

Optionally, the self-moving cleaning device may further include a user interface, a network interface, a camera, a radio frequency (RF) circuit, a sensor, an audio circuit, a WI-FI module, and the like. The user interface may include a display, an input unit such as a keyboard, and the like. Optionally, the user interface may further include a USB interface, a card reader interface, and the like. Optionally, the network interface may include a standard wired interface, a wireless interface (such as a Bluetooth interface and a WI-FI interface), and the like.

It will be understood by those skilled in the art that the structure of the self-moving cleaning device provided by the present embodiment does not constitute a limitation to the self-moving cleaning device. The self-moving cleaning device may include more or less components, or a combination of some components, or the components arranged in a different fashion.

It should be noted that in the exemplary implementation of the present disclosure, a map construction method of the self-moving cleaning device may be implemented by the self-moving cleaning device (e.g., a self-moving mopping cleaning device, a sweeping and mopping integrated machine, etc.). In other words, various steps of the control method of the self-moving cleaning device may be performed by the self-moving cleaning device. In this case, the control apparatus 500 of the self-moving cleaning device may be configured in the self-moving cleaning device.

Based on the method provided by the above embodiments, correspondingly, an embodiment of the present disclosure further provides a storage medium storing a computer program thereon, wherein the program, when performed by a processor, implements the control method of the self-walking robot provided by the above embodiments.

Based on this understanding, the technical solutions of the present disclosure may be embodied in the form of a software product. The software product may be stored in a non-volatile storage medium (which may be a CD-ROM, a USB flash drive, a mobile hard disk, etc.), and includes several instructions to cause a computer device (which may be a personal computer, a server, a network device, or the like) to perform the method described in the various implementation scenarios of the present disclosure.

The storage medium may further include an operating system and a network communication module. The operating system is a program that manages and stores hardware and software resources of the computer device, and supports the running of information processing programs and other software and/or programs. The network communication module is configured to implement communication between various controls inside the storage medium and communication with other hardware and software in the physical device.

As shown in FIG. 6, the self-walking robot may include a processing apparatus 601 (such as a central processing unit, a graphics processing unit, or the like) that may perform various appropriate actions and processing according to a program stored in a read-only memory (ROM 602) or a program loaded from a storage apparatus 608 into a random-access memory (RAM 603). In the RAM 603, various programs and data required for operation of the electronic self-walking robot are further stored. The processing apparatus 601, the ROM 602, and the RAM 603 are connected to each other by using a bus 604. An input/output (I/O) interface is also connected to the bus 604.

Generally, the following apparatuses may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a hard disk, etc.; and a communication apparatus 609. The communication apparatus 609 may allow the electronic self-walking robot to perform wireless or wired communication with other self-walking robots to exchange data. Although FIGs. 3 and 4 show electronic self-walking robots with various apparatuses, it should be understood that it is not required to implement or provide all shown apparatuses. Alternatively, more or fewer apparatuses may be implemented or provided.

In particular, according to the embodiments of the present disclosure, the process described above with reference to the flowchart may be implemented as a self-walking robot software program. For example, an embodiment of the present disclosure includes a self-walking robot software program product that includes a computer program carried on a readable medium, and the computer program includes program codes for executing the method shown in the flowchart of FIG. 4. In such an embodiment, the computer program may be downloaded and installed from a network by means of the communication apparatus 609, installed from the storage apparatus 608, or installed from the ROM 602. When the computer program is performed by the processing apparatus 601, the foregoing functions defined in the method in the embodiments of the present disclosure are performed.

Further, as shown in FIGs. 1 and 2, an embodiment of the present disclosure provides a self-moving cleaning device 100. The self-moving cleaning device 100 includes: a body 110 and a cleaning element 153 arranged at the bottom of the body 110, at least a portion of the cleaning element 153 being located outside the edge projection area of the body 110; a driving apparatus 140 configured to drive the self-moving cleaning device 100 to travel; and a control module 160 configured to determine whether the self-moving cleaning device 100 is in a narrow area, and when the self-moving cleaning device 100 is in the narrow area, control the driving apparatus 140 to drive the self-moving cleaning device 100 to perform an obstacle avoidance operation.

Further, the control module 160 is further configured to: when the self-moving cleaning device 100 performs a turning operation, if it is determined that the cleaning element 153 is in a first state and the self-moving cleaning device 100 is at a first position in the space where it is located, determine that the self-moving cleaning device 100 is in the narrow area.

Further, the self-moving cleaning device 100 includes a perception apparatus 120; and determining that the self-moving cleaning device 100 is at the first position in the space where it is located includes at least one of the following ways: a trigger member located at a front part of the body 110 in the perception apparatus 120 is triggered; a first detection member located on the body 110 in the perception apparatus 120 detects that there is a cliff feature ahead of the body 110; and a second detection member located on the body 110 in the perception apparatus 120 detects that the distance between the body 110 and an obstacle located ahead of the body 110 is less than a preset threshold.

Further, the self-moving cleaning device 100 further includes: a driving part configured to drive the cleaning element 153 to rotate, and a perception apparatus 120 configured to sense electrical signal information of the driving part; and the control module 160 is further configured to: determine whether the cleaning element 153 is in the first state based on information sensed by the perception apparatus 120, wherein the electrical signal information of the driving part changes when the cleaning element 153 touches an obstacle.

Further, the body 110 is circular; the self-moving cleaning device 100 further includes: a perception apparatus 120 configured to sense the distance between the obstacle and the body 110; and the control module 160 is further configured to: determine whether the cleaning element 153 is in the first state based on the radius of the body 110, the maximum distance between an outer edge of the cleaning element 153 located outside the edge projection area of the body 110 and a rotation center of the body 110, and the information sensed by the perception apparatus 120.

Further, the control module 160 is further configured to: acquire a reachable area of the self-moving cleaning device 100 based on a map of the space where the self-moving cleaning device 100 is located, determine a rotation direction and a rotation angle of the self-moving cleaning device 100 based on the reachable area, and control the driving apparatus 140 to drive the self-moving cleaning device 100 to perform a backward operation after rotating according to the rotation direction and the rotation angle to enable the self-moving cleaning device 100 to move away from the narrow area and then perform the turning operation.

Further, the control module 160 is further configured to: if the self-moving cleaning device 100 is still in the narrow area after executing the turning operation, control the driving apparatus 140 to drive the self-moving cleaning device 100 to repeatedly perform an obstacle separation operation multiple times until the self-moving cleaning device 100 completes the turning operation, wherein the obstacle separation operation includes: re-determining the rotation direction and rotation angle of the self-moving cleaning device 100 based on the reachable area, and controlling the self-moving cleaning device 100 to perform a backward operation after rotating according to the re-determined rotation direction and rotation angle to enable the self-moving cleaning device 100 to move away from the narrow area again and then perform the turning operation again.

Further, the control module 160 is further configured to: if the self-moving cleaning device 100 is still located in the narrow area after repeatedly executing the obstacle separation operation multiple times, control the driving part of the cleaning element 153 to adjust a rotation direction of the cleaning element 153 to enable the rotation direction of the cleaning element 153 to be the same as a turning direction of the turning operation, or control the driving part of the cleaning element 153 to enable the cleaning element 153 to stop rotating and control the driving apparatus 140 to drive the self-moving cleaning device 100 to perform the turning operation until the self-moving cleaning device 100 escapes the narrow area.

Through the description of the above embodiments, those skilled in the art can clearly understand that the present disclosure can be implemented by means of software and necessary general-purpose hardware platform, or by hardware.

Those skilled in the art can understand that the accompanying drawings are merely schematic diagrams of an optional implementation scenario, and units or processes in the accompanying drawings are not necessarily essential for implementing the present disclosure. Those skilled in the art can understand that units in apparatuses in the implementation scenario may be distributed in the apparatuses in the implementation scenario according to the description of the implementation scenario, and may also be correspondingly changed and configured in one or more apparatuses different from that in the current implementation scenario. The units in the above-mentioned implementation scenarios may be merged into a single unit or be sub-divided into multiple sub-units.

The above serial numbers of the present disclosure are merely for description, and do not represent the priority of the implementation scenarios. Only a few specific implementation scenarios of the present disclosure are disclosed above; however, the present disclosure is not limited thereto. Any changes that can be conceived by those skilled in the art shall fall within the protection scope of the present disclosure.

## Claims

1. A control method of a self-moving cleaning device, wherein the self-moving cleaning device comprises: a body and a cleaning element arranged at the bottom of the body, at least a portion of the cleaning element being located outside an edge projection area of the body; and the control method of the self-moving cleaning device comprises:
determining whether the self-moving cleaning device is in a narrow area, and
when the self-moving cleaning device is in the narrow area, controlling the self-moving cleaning device to perform an obstacle avoidance operation.

2. The control method of the self-moving cleaning device according to claim **1,** wherein the cleaning element is located at the rear of the body; and said determining whether the self-moving cleaning device is in the narrow area comprises:
when the self-moving cleaning device performs a turning operation, if it is determined that the cleaning element is in a first state and the self-moving cleaning device is at a first position in a space where it is located, determining that the self-moving cleaning device is in the narrow area.

3. The control method of the self-moving cleaning device according to claim 2, wherein the self-moving cleaning device comprises a perception apparatus; and said determining that the self-moving cleaning device is at the first position in the space where it is located comprises at least one of the following ways:
a trigger member located at a front part of the body in the perception apparatus is triggered,
a first detection member located on the body in the perception apparatus detects that there is a cliff feature ahead of the body, and
a second detection member located on the body in the perception apparatus detects that a distance between the body and an obstacle located ahead of the body is less than a preset threshold.

4. The control method of the self-moving cleaning device according to claim 2, wherein said determining that the cleaning element is in the first state comprises:
determining whether the cleaning element is in the first state based on electrical signal information of a driving part of the cleaning element, wherein the electrical signal information of the driving part changes when the cleaning element touches an obstacle.

5. The control method of the self-moving cleaning device according to claim 2, wherein the body is circular; and said determining that the cleaning element is in the first state comprises:
determining whether the cleaning element is in the first state based on a radius of the body, a maximum distance between an outer edge of the cleaning element located outside the edge projection area of the body and a rotation center of the body, and a distance between the obstacle and the body.

6. The control method of the self-moving cleaning device according to claim 2, wherein said controlling the self-moving cleaning device to perform the obstacle avoidance operation comprises:
acquiring a reachable area of the self-moving cleaning device based on a map of the space where the self-moving cleaning device is located; and
determining a rotation direction and a rotation angle of the self-moving cleaning device based on the reachable area, and controlling the self-moving cleaning device to perform a backward operation after rotating according to the rotation direction and the rotation angle to enable the self-moving cleaning device to move away from the narrow area and then perform the turning operation.

7. The control method of the self-moving cleaning device according to claim 6, wherein said controlling the self-moving cleaning device to perform the obstacle avoidance operation further comprises:
if the self-moving cleaning device is still in the narrow area after executing the turning operation, controlling the self-moving cleaning device to repeatedly perform an obstacle separation operation multiple times until the self-moving cleaning device completes the turning operation,
wherein the obstacle separation operation comprises:
re-determining the rotation direction and the rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

8. The control method of the self-moving cleaning device according to claim 7, wherein said controlling the self-moving cleaning device to perform the obstacle avoidance operation further comprises:
if the self-moving cleaning device is still located in the narrow area after repeatedly executing the obstacle separation operation multiple times, adjusting a rotation direction of the cleaning element to enable the rotation direction of the cleaning element to be the same as a turning direction of the turning operation, or controlling the cleaning element to stop rotating and controlling the self-moving cleaning device to perform the turning operation until the self-moving cleaning device escapes the narrow area.

9. A control apparatus of a self-moving cleaning device, wherein the self-moving cleaning device comprises: a body and a cleaning element arranged at the bottom of the body, at least a portion of the cleaning element being located outside an edge projection area of the body; and the control apparatus of the self-moving cleaning device comprises:
a determination module configured to determine whether the self-moving cleaning device is in a narrow area, and
a control module configured to, when the self-moving cleaning device is in the narrow area, control the self-moving cleaning device to perform an obstacle avoidance operation.

10. The control apparatus of the self-moving cleaning device according to claim 9, wherein the cleaning element is located at the rear of the body; and the determination module is configured to:
when the self-moving cleaning device performs a turning operation, if it is determined that the cleaning element is in a first state and the self-moving cleaning device is at a first position in a space where it is located, determine that the self-moving cleaning device is in the narrow area.

11. The control apparatus of the self-moving cleaning device according to claim 10, wherein the self-moving cleaning device comprises a perception apparatus; and the determination module comprises:
a first determination unit configured to determine that the self-moving cleaning device is at the first position in the space where it is located by at least one of the following ways:
a trigger member located at a front part of the body in the perception apparatus is triggered;
a first detection member located on the body in the perception apparatus detects that there is a cliff feature ahead of the body; and
a second detection member located on the body in the perception apparatus detects that a distance between the body and an obstacle located ahead of the body is less than a preset threshold.

12. The control apparatus of the self-moving cleaning device according to claim 10, wherein the determination module comprises:
a second determination unit configured to determine whether the cleaning element is in the first state based on electrical signal information of a driving part of the cleaning element, wherein the electrical signal information of the driving part changes when the cleaning element touches an obstacle.

13. The control apparatus of the self-moving cleaning device according to claim 10, wherein the body is circular; the determination module comprises:
a third determination unit configured to determine whether the cleaning element is in the first state based on a radius of the body, a maximum distance between an outer edge of the cleaning element located outside the edge projection area of the body and a rotation center of the body, and a distance between the obstacle and the body.

14. The control apparatus of the self-moving cleaning device according to claim 10, wherein the control module comprises: an acquisition unit configured to acquire a reachable area of the self-moving cleaning device based on a map of the space where the self-moving cleaning device is located; and a first processing unit configured to determine a rotation direction and a rotation angle of the self-moving cleaning device based on the reachable area, and control the self-moving cleaning device to perform a backward operation after rotating according to the rotation direction and the rotation angle to enable the self-moving cleaning device to move away from the narrow area and then perform the turning operation.

15. The control apparatus of the self-moving cleaning device according to claim 14, wherein the control module further comprises:
a second processing unit configured to: if the self-moving cleaning device is still in the narrow area after executing the turning operation, control the self-moving cleaning device to repeatedly perform an obstacle separation operation multiple times until the self-moving cleaning device completes the turning operation,
wherein the obstacle separation operation comprises: re-determining the rotation direction and rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

16. The control apparatus of the self-moving cleaning device according to claim 15, wherein the control module further comprises:
a third processing unit configured to: if the self-moving cleaning device is still located in the narrow area after repeatedly executing the obstacle separation operation multiple times, adjust a rotation direction of the cleaning element to enable the rotation direction of the cleaning element to be the same as a turning direction of the turning operation, or control the cleaning element to stop rotating and control the self-moving cleaning device to perform the turning operation until the self-moving cleaning device escapes the narrow area.

17. A readable storage medium, storing a program or instruction thereon, wherein the program or instruction, when performed by a processor, implements the steps of the control method of the self-moving cleaning device according to any one of claims 1 to 8.

18. A self-moving cleaning device, comprising a storage medium, a processor, and a computer program stored on the storage medium and executable on the processor, wherein the processor, when executing the program, implements the control method of the self-moving cleaning device according to any one of claims 1 to 8.

19. A self-moving cleaning device, comprising:
a body and a cleaning element arranged at the bottom of the body, at least a portion of the cleaning element being located outside an edge projection area of the body;
a driving apparatus configured to drive the self-moving cleaning device to travel; and
a control module configured to determine whether the self-moving cleaning device is in a narrow area, and when the self-moving cleaning device is in the narrow area, control the driving apparatus to drive the self-moving cleaning device to perform an obstacle avoidance operation.

20. The self-moving cleaning device according to claim 19, wherein the control module is further configured to:
when the self-moving cleaning device performs a turning operation, if it is determined that the cleaning element is in a first state and the self-moving cleaning device is at a first position in a space where it is located, determine that the self-moving cleaning device is in the narrow area.

21. The self-moving cleaning device according to claim 20, wherein the self-moving cleaning device comprises a perception apparatus; and said determining that the self-moving cleaning device is at the first position in the space where it is located comprises at least one of the following ways:
a trigger member located at a front part of the body in the perception apparatus is triggered;
a first detection member located on the body in the perception apparatus detects that there is a cliff feature ahead of the body; and
a second detection member located on the body in the perception apparatus detects that a distance between the body and an obstacle located ahead of the body is less than a preset threshold.

22. The self-moving cleaning device according to claim 20, further comprising:
a driving part configured to drive the cleaning element to rotate, and
a perception apparatus configured to sense electrical signal information of the driving part; and
the control module is further configured to: determine whether the cleaning element is in the first state based on information sensed by the perception apparatus, wherein the electrical signal information of the driving part changes when the cleaning element touches an obstacle.

23. The self-moving cleaning device according to claim 20, wherein the body is circular; and the self-moving cleaning device further comprises:
a perception apparatus configured to sense a distance between the obstacle and the body; and
the control module is further configured to: determine whether the cleaning element is in the first state based on a radius of the body, a maximum distance between an outer edge of the cleaning element located outside the edge projection area of the body and a rotation center of the body, and the information sensed by the perception apparatus.

24. The self-moving cleaning device according to claim 20, wherein the control module is further configured to: acquire a reachable area of the self-moving cleaning device based on a map of the space where the self-moving cleaning device is located; and determine a rotation direction and a rotation angle of the self-moving cleaning device based on the reachable area, and control the driving apparatus to drive the self-moving cleaning device to perform a backward operation after rotating according to the rotation direction and the rotation angle to enable the self-moving cleaning device to move away from the narrow area and then perform the turning operation.

25. The self-moving cleaning device according to claim 24, wherein the control module is further configured to:
if the self-moving cleaning device is still in the narrow area after executing the turning operation, control the driving apparatus to drive the self-moving cleaning device to repeatedly perform an obstacle separation operation multiple times until the self-moving cleaning device completes the turning operation,
wherein the obstacle separation operation comprises: re-determining the rotation direction and rotation angle of the self-moving cleaning device based on the reachable area, and controlling the self-moving cleaning device to perform a backward operation after rotating according to the re-determined rotation direction and rotation angle to enable the self-moving cleaning device to move away from the narrow area again and then perform the turning operation again.

26. The self-moving cleaning device according to claim 25, wherein the control module is further configured to:
if the self-moving cleaning device is still located in the narrow area after repeatedly executing the obstacle separation operation multiple times, control the driving part of the cleaning element to adjust a rotation direction of the cleaning element to enable the rotation direction of the cleaning element to be the same as a turning direction of the turning operation, or control the driving part of the cleaning element to stop rotating and control the driving apparatus to drive the self-moving cleaning device to perform the turning operation until the self-moving cleaning device escapes the narrow area.
